# EUROPEAN PATENT APPLICATION

(11) **EP 1 764 793 A1**
(43) Date of publication of application: **21.03.2007**
(21) Application number: 05755861.1
(22) Date of filing: 24.06.2005
(51) Int. Cl.: G11B 7/24, G11B 7/26

(54) **OPTICAL RECORDING MEDIUM AND PROCESS FOR PRODUCING THE SAME**

(30) Priority: 01.07.2004 JP 2004195942; 06.10.2004 JP 2004293775; 14.01.2005 JP 2005007249
(71) Applicant: Pioneer Corporation, Tokyo 153-8654 (JP)
(72) Inventor: HIGUCHI, Takanobu, Corp. Res. and Dev. Lab., Tsurugashima-shi, Sai tama 3502288 (JP); HOSODA, Yasuo, Corp. Res. and Dev. Lab., Tsurugashima-shi, Saitama 3502288 (JP)
(74) Representative: Günther, René
(86) International application number: PCT/JP2005/012168
(87) International publication number: WO 2006/004025

(57) **Abstract**

A recording medium which exhibits good recording/reproducing characteristics that make the recording medium usable in an optical recording/reproducing apparatus using a short-wavelength laser, while including a reflective film containing an aluminum alloy which excels in view of the cost and handling, and a method of manufacturing the recording medium. The recording medium has a reflective film including an aluminum alloy, and an oxide of a metal other than aluminum.

## Description

### BACKGROUND OF THE INVENTION

### 1. Field of the Invention

The present invention relates to an optical recording medium and a method of manufacturing the same, and more particularly, to an optical recording medium which includes a reflective film made of aluminum or aluminum alloy, which can be used in an optical recording/reproducing apparatus using a short-wavelength laser, and a method of manufacturing the optical recording medium.

### 2. Description of the Related Art

An optical recording medium such as CD and DVD, by way of example, contains a reflective film irrespective of its recording/reproducing system. Generally, this reflective film is made of aluminum, gold, silver, or alloy thereof, or silicon. For example, an optical disk such as CD, DVD and the like employs a thin film made of an aluminum alloy or gold, while the DVD employs a translucent film made of a thin pure gold film or a thin pure silicon film.

In an optical recording apparatus which uses a blue laser at wavelength of approximately 400 nm for recording or reproduction, a gold or silicon thin film cannot provide a sufficient reflectivity as a reflective film of those recording media. Also, there have been problems with a gold alloy which involves a high cost, and with silver which is regulated by "Pollutant Release and Transfer Register" regulation (PRTR).

Here, aluminum and aluminum alloys are highly advantageous over gold alloys in view of the cost and handling. On the other hand, particularly for a laser spot size of an optical recording apparatus based on a blue laser, represented by Blu-ray Disc, it has been quite difficult to sufficiently reduce the crystal grain diameter of such aluminum-based thin films, i.e., specifically to a size smaller by an order of magnitude or more. For this reason, a disk which employs an aluminum-based reflective film has suffered from large noise during recording and reproduction, thereby failing to accomplish sufficient recording/reproducing characteristics.

### SUMMARY OF THE INVENTION

It is therefore an object of the present invention to provide a recording medium which, though having a reflective film made of aluminum or aluminum alloy which is desirable in view of the cost and handling, offers good recording/reproducing characteristics in an optical recording/reproducing apparatus using a short-wavelength laser, and a method of manufacturing the recording medium.

An optical recording medium according to the present invention has a reflective film, wherein the reflective film includes an aluminum alloy, and an oxide of a metal other than aluminum.

Further, a method of manufacturing an optical recording medium according to the present invention includes a step of forming a reflective film on a substrate by a sputtering method. The method further includes an atmosphere forming step for introducing an oxide of a metal other than aluminum into a sputter atmosphere together with an aluminum alloy, and a step of laminating the oxide on the substrate together with the aluminum alloy.

### BRIEF DESCRIPTION OF THE DRAWINGS

Fig. 1 is a cross-sectional view of an optical disk;
Fig. 2 is a graph showing the reflectivity and noise with respect to the content of M (=Au) in an optical disk according to a second embodiment of the present invention;
Fig. 3 is a graph showing the reflectivity and noise with respect to the content of M (=Pd) in an optical disk according to a second embodiment of the present invention;
Fig. 4 is a graph showing jitter of an optical disk according to a fourth embodiment of the present invention, and the reflectivity of a reflective film which is included in the optical disk;
Fig. 5 is a graph showing the reflectivity and noise with respect to the content of M (=Pt) in an optical disk according to a fifth embodiment of the present invention; and
Fig. 6 is a cross-sectional view of a reproduction-only type disk according to a sixth embodiment of the present invention.

### DETAILED DESCRIPTION OF THE INVENTION

An optical recording medium according to the present invention will be described with reference to the accompanying drawings.

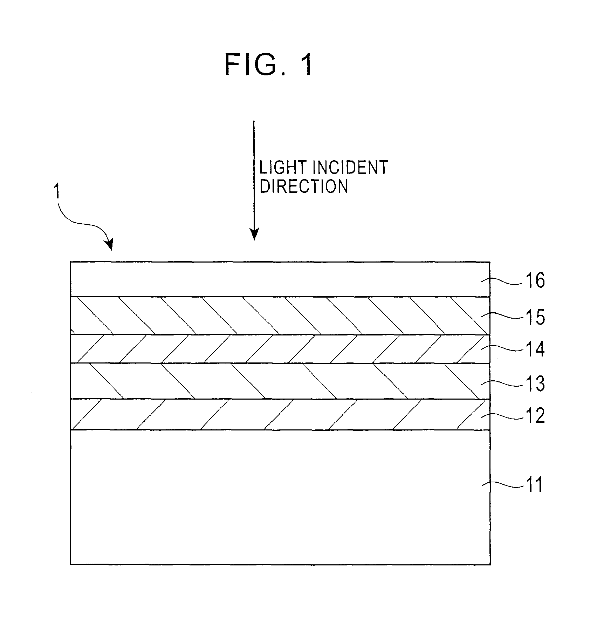

As shown in Fig. 1, the optical recording medium according to the present invention, though not limited to the illustrated one, has a multi-layer structure which is composed, by way of example, of a reflective film layer 12, a second protective layer 13, a recording film layer 14, and a first protective layer 15, which are laminated on a disk-shaped substrate 11 in this order by a sputtering method, and a resin cover layer 16 which is adhered to the laminate. Light for recording or reproducing information is given to the recording film layer 14 from the resin cover layer 16 side.

The reflective film layer 12 is produced with a sputtering target composed of pure aluminum or aluminum alloy added with an oxide of a metal other than aluminum, by a sputtering method. The sputtering target, on the other hand, may be made by a cosputter-based method which divides the target into a plurality on a material-by-material basis, such as an aluminum alloy and an oxide of a metal other than aluminum; aluminum, a metal element (or metal compound), and an oxide of a metal other than aluminum; and the like. Specifically, an oxide of a metal other than aluminum is introduced into a sputter atmosphere together with aluminum or aluminum alloy. In this way, the reflective film layer 12 is formed of pure aluminum or aluminum alloy which traps therein an oxide of the metal other than aluminum. Thus, the crystal grains can be maintained small without reducing the reflectivity. For suppressing noise during recording and reproduction to a sufficiently practical level to improve the recording/reproducing characteristics, it is contemplated that an average crystal grain diameter of the reflective film layer 12 is preferably smaller than a laser spot size (diameter) d. For further improving the recording/reproducing characteristics, the average crystal grain diameter of the reflective film layer 12 is preferably smaller than the laser spot size d by half, more preferably one-fifth, and most preferably one-tenth of the laser spot size. Such a reflective film can stably exhibit good recording characteristics even if it is used, for example, in a recording medium which is optically recorded and reproduced by a short-wavelength laser such as a blue laser. More specifically, the laser spot size (diameter) d in a laser-based optical recording apparatus is given by d=λ/NA,

where λ represents the laser wavelength, and NA the numerical aperture. For example, assuming that λ=400 nm and NA=0.85, d is calculated to be 470 nm. Typically, the average crystal grain diameter of the reflective film layer made of pure aluminum or aluminum alloy containing an oxide of a metal other than aluminum, according to the present invention, is smaller than 47 nm which is one-tenth the aforementioned value of d.

Here, when an oxide of a metal other than aluminum is introduced into a sputtering atmosphere together with aluminum or aluminum alloy for sputtering, the oxide is shattered by a discharge and trapped into the film. The oxide impedes the growth of crystal grains of aluminum or aluminum alloy, which comprises the reflective film layer 12, during a deposition process, so that the crystal grains can be maintained to be very small. It is generally thought that the addition of an oxide to a reflective film is not preferable because of a resulting reduction in the reflectivity. However, as described later, the reflective film according to the present invention exhibits a high reflectivity and good recording/reproducing characteristics even if an oxide is added to the reflective film. Presumably, this is because the miniaturization of the average crystal grain diameter of the aluminum alloy largely contributes to a reduction in the reflectivity due to the addition of the oxide.

The present invention is particularly characterized by the reflective film layer 12 of the recording medium, and in examples described below, the reflective film layer 12 does not depend on the type and number of protective layers 13, 15. The protective film may be made of such material as, for example, a metal compound such as a metal nitride such as ZnS, SiO₂ or the like, a metal oxide, a metal carbide, a metal sulfide or the like, or a mixture thereof.

The recording film layer 14 is also similar in that the recording film layer 14 can be made of a different material as required. For example, when the recording film layer 14 is made of a phase changing material such as SbTe, such a recording disk can serve as a rewritable recording disk. Alternatively, when the recording film layer 14 is made of a pigment film, the resulting disk can serve as an organic pigment recording disk. In other words, the recording film layer 14 can be widely used in recording media which utilize an optical reflective film. For example, it can be used in an optical recording or a magneto-optical recording medium in a shape other than a disk shape, such as a card type one. In addition, it can be applied to a cooling layer of a heat assist magnetic recording medium.

### [Example 1]

A description will be given of a recording medium 1 according to a first example of the present invention.

A spiral groove at a pitch of 0.320 µm was formed in a disk-shaped substrate 11 made of polycarbonate resin which had a thickness of 1.1 mm and a diameter of 12 cm. On this substrate 11, a reflective film layer 12 made of Al-SnO₂, a second protective layer 13 made of ZnS-SiO₂, a recording film layer 14 made of Bi-Ge-N, and a first protective layer 15 made of ZnS-SiO₂ were laminated in this order by a sputtering method. The sputtering power was chosen to be 2000 W. Table 1 shows the layers of the recording medium disk together with their materials and thicknesses.

**Table 1**

| Layer | Material | Thickness |
|---|---|---|
| Reflective Film Layer | Al-SnO₂ | 50 nm |
| Second Protective Layer | ZnS-SiO₂ | 20 nm |
| Recording Film Layer | Bi-Ge-N | 12 nm |
| First Protective Layer | ZnS-SiO₂ | 25 nm |

Further, a polycarbonate sheet was adhered to the laminate from above using an ultraviolet curing resin for an adhesive to fabricate a light incident side substrate (cover layer) 16 of 0.1 mm thick.

Here, in the first example, two types of recording medium disks were fabricated by changing the amount of SnO₂ in the reflective film layer 12. Specifically, in a process of forming the reflective film layer 12 by a sputtering method, two types of sputter targets were prepared, i.e., one containing 0. 4 atom% of SnO₂, and the other one containing 0.6 atom% of SnO₂ for deposition. Resulting reflective layers 12 had two different compositions with 0.13 atom% and 0.25 atom% in atomic ratio of SnO₂, respectively. As will be understood from this result, a film can be produced with an atomic ratio of SnO₂ which is approximately one third of the atomic ratio of SnO₂ in the sputter target. The respective recording medium disks are called the "disk 1-a" and "disk 1-b," respectively.

With the two types of disks 1-a, 1-b, a 1-7 modulation random pattern was recorded on a guide groove surface in a convex shape on the light incident side at a line velocity of 4.92 m/s using an optical head having a wavelength of 405 nm and an objective lens with a numerical aperture of 0.85. Multi-pulses were used for this recording, with a window width being set to 15.15 nsec. Table 2 shows total noise, recording LD power, and post-recording jitter which were measured for the disks 1-a, 1-b.

**Table 2**

| | Total Noise | Recording LD Power | Post-Recording Jitter |
|---|---|---|---|
| Disk 1-a | -42.6 dB | 5 mW | 6.5 % |
| Disk 1-b | -43.6 dB | 5 mW | 6.6 % |

Thus, either of the disks can exhibit good post-recording jitter.

For reference, when the reflectivity was measured for each reflective film which had been formed in a similar method of the disks 1-a, 1-b, the measured values were 55 % and 56 %. Stated another way, even a reflective film containing an oxide has a reflectivity as high as the reflectivity of a reflective film made of a simple metal. More specifically, since an oxide generally exhibits a very low deposition rate of sputtering as compared with a simple metal and an alloy, a small amount of oxide will be contained in a deposited film, with small contributions to a reduction in the reflectivity as a reflective film.

Also, SnO₂ in the reflective film layer 12 may partially lose oxygen to produce SnOx (x<2), but is was confirmed that such SnOx does not affect the effect of impeding the growth of crystal grains of aluminum or aluminum alloy, which comprises the reflective film layer 12, during the deposition process.

The recording film layer 14 may be a recording film which mainly contain a nitride of Bi, Sn, Fe, and one or a plurality of nitrides of Ge, Ti, Si, Al.

### [Example 2]

A description will be given of a recording medium 1 according to a second embodiment of the present invention.

A spiral groove at a pitch of 0.320 µm was formed in a disk-shaped substrate 11 made of polycarbonate resin which had a thickness of 1.1 mm and a diameter of 12 cm, as is the case in the first example. On this substrate 11, a reflective film layer 12 made of Al-M-SnO₂ (M is Pd or Au, details of which will be described later), a second protective layer 13 made of ZnS-SiO₂, a recording film layer 14 made of Bi-Ge-N, and a first protective layer 15 made of ZnS-SiO₂ were laminated in this order by a sputtering method. The sputtering power was chosen to be 700 W. Table 3 shows the layers of the recording medium disk together with their materials and thicknesses.

**Table 3**

| Layer | Material | Thickness |
|---|---|---|
| Reflective Film Layer | Al-M-SnO₂ | 50 nm |
| Second Protective Layer | ZnS-SiO₂ | 20 nm |
| Recording Film Layer | Bi-Ge-N | 12 nm |
| First Protective Layer | ZnS-SiO₂ | 25 nm |

Further, a polycarbonate sheet was adhered to the laminate from above using an ultraviolet curing resin for an adhesive to fabricate a light incident side substrate (cover layer) 16 of 0.1 mm thick.

Here, in the second example, two types of recording medium disks were fabricated by adding different metals to the reflective film layer 12 which contained the same oxide as that of the first example. Specifically, in a process of forming the reflective film layer 12 by a sputtering method, two types of sputter targets were prepared, i.e., one added with Pd and the other one added with Au, for deposition. The resulting reflective film layer 12 added with Pd had 3.55 atom% of Pd in atomic ratio, while resulting reflective film 12 added with Au had 3.84 atom% of Au in atomic ratio. The respective recording medium disks are called the "disk 2-a" and "disk 2-b," respectively. The amount of SnO₂ contained in the aforementioned sputter targets was 0.4 atom% in common, and either of the disks 2-a, 2-b contained 0.13 atom% of SnO₂ in the resulting reflective film layer 12. In other words, each of the disks 2-a, 2-b has the reflective film layer 12 in the same composition as that of the disk 1 in the first example.

For the two types of disks 2-a, 2-b, total noise, recording LD power, and post-recording jitter were measured under similar conditions to the first example. Table 4 shows the total noise, recording LD power, and post-recording jitter which were measured for the disks 2-a, 2-b.

**Table 4**

| | Total Noise | Recording LD Power | Post-Recording Jitter |
|---|---|---|---|
| Disk 2-a | -45.6 dB | 5 mW | 5.9 % |
| Disk 2-b | -45.3 dB | 5 mW | 6.1 % |

Thus, either of the disks can exhibit good post-recording jitter, as is the case in the first example. As described above, in the second example, the sputtering power in the process of forming the reflective film layer 12 is lower than that in the first example. A reduction in the sputtering power promotes the growth of crystal grains during the deposition, resulting in increased noise and jitter. However, in the second example which uses lower sputtering power than the first example, the second example can have even better characteristics than the first example from the fact that it can accomplish total noise and jitter close to those exhibited by the first example.

When the reflectivities of the reflective films, formed in a similar method to the disks 2-a, 2-b, were measured in a similar method to the first example, the measured values were 53 % and 50 %, respectively. Likewise, in this result, the reflective films 12 have high reflectivities equivalent to that of a reflective film made of a simple metal.

The available additive metal M may include Pt, Tl, Pb, Bi, Os, Ir, Ru, Rh, In, Sn, Ni, Zn, Cu, Cd, Ti, Zr, Hf, V, Nb, Ta, Cr, Mo, W, and Tc, in addition to the aforementioned elements. A composition of a plurality of these elements may be used as well. Further, similar effects can be produced as well using an alloy to which a trace of third and fourth elements is added.

Next, in the disk having the reflective film layer made of Al-M-SnO₂ (M is Pd or Au), disks were created with varying contents of M to examine the influence of the contents of M exerted to the characteristics of the disks. A spiral groove at a pitch of 0.320 µm was formed in a disk-shaped substrate 11 made of polycarbonate resin which had a thickness of 1.1 mm and a diameter of 12 cm. On this substrate 11, a reflective film layer 12 made of Al-M-SnO₂ (M is Pd or Au) was laminated by a sputtering method. The sputtering power was chosen to be 300 W, and the thickness of the reflective film thickness 12 was chosen to be 50 nm. Here, for directly observing changes in the characteristics of the reflective film layer 12 due to a varying content of M, none of a second protective layer 13, a recording film layer 14 made of Bi-Ge-N, and a first protective film 15 made of ZnS-SiO₂ was formed, and a polycarbonate sheet was adhered onto the reflective film layer 12 using an ultraviolet curing resin for an adhesive to fabricate a light incident side substrate (cover layer 16) of 0.1 mm thick. As such, the formation of the reflective film layer 12 will only be described below.

The reflective film layer was formed using a sputtering target made of an aluminum alloy added with an oxide of a metal other than aluminum by a sputtering method. Several targets were prepared with a varying content of Pd or Au in the aluminum alloys. When Au was added, resulting reflective film layers contained 0, 1.73, 3,38, 4,95, 7.82, and 11.40 atom% of Au by the sputtering method using the targets. When Pd was added, resulting reflective film layers contained 0, 0.04, 0.65, 1.52, 2.47, 4.81, 7.35, 9.20, and 11. 20 atom% of Pd. These reflective film layers were prepared on disks in a similar method through the aforementioned processes. For measuring the reflectivity of the reflective film layer alone, composed of the aluminum alloy containing Pd or Au and the oxide, for purposes of comparison, a sample was also created by forming a reflective film layer alone on a flat plate, other than the preparation on the disks.

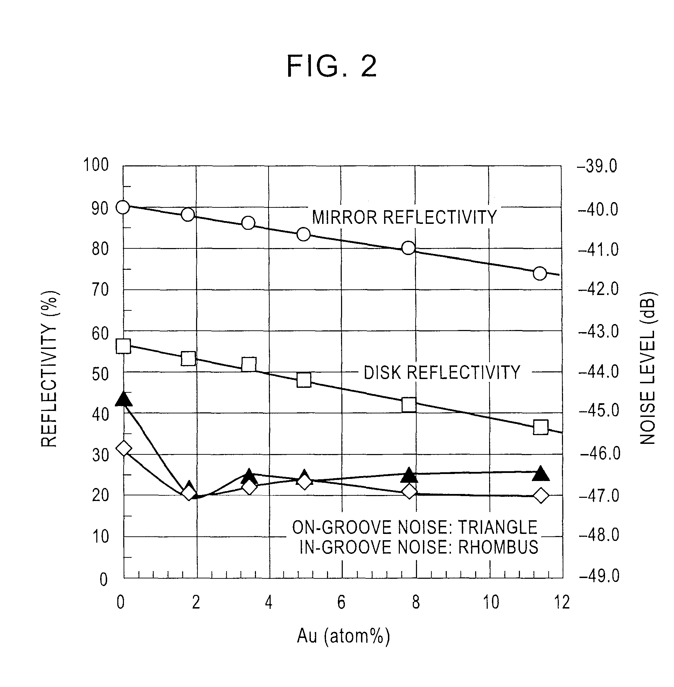

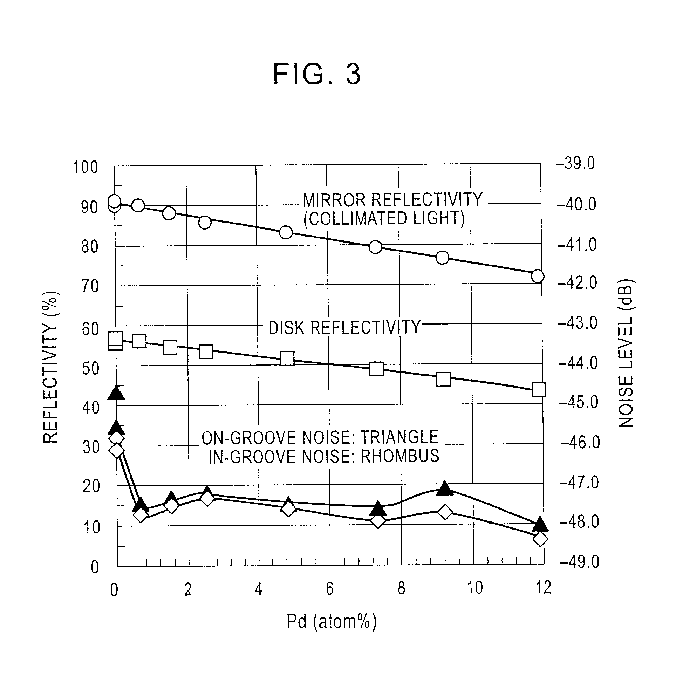

First, a measurement of the reflectivity of the aforementioned sample having the reflective film layer alone on the flat plate was made. Further, the reflectivity and noise were measured for the disks (not shown) formed only with the reflective film layer 12. The noise was measured at two locations on the groove and in the groove on the convex guide groove surface on the light incident side. The results of the foregoing measurements are shown in Figs. 2 and 3.

As can be seen from Fig. 2, in the disk which includes the Al-Au-SnO₂ reflective film layer added with Au, noise is largely reduced as compared with a disk including an Al-SnO₂ reflective film layer. However, the reduction in noise reaches a minimum when about 1.5 atom% of Au is added, and as the amount of Au is subsequently increased, the noise levels at a constant value approximately between -46. 5 dB and -47.0 dB, though it exhibits a slight increase. Stated another way, with the addition of a certain amount or more of Au, improvements on noise of approximately 2 dB on the groove, and approximately 1 to 2 dB in the groove are measured as compared with a reflective film which is not added with Au. On the other hand, the mirror reflectivity and disk reflectivity monotonously decrease as the amount of added Au is increased. The disk reflectivity has a slightly larger slope than the mirror reflectivity.

From the foregoing results, the amount of added Au is preferably 7 atom% when a reduction in the disk reflectivity is permitted up to 10 %, more preferably 5 atom% when a reduction in the disk reflectivity is permitted up to 8 %, and further more preferably, 3 atom% when a reduction in the disk reflectivity is permitted up to 6%. Most preferably, the amount of added Au is 2 atom%, in which case a reduction in nose is maximized.

Next, as can be seen from Fig. 3, in the disk including the Al-Pd-SnO₂ reflective film layer added with Pd, noise is largely reduced as well, as compared with the disk including the Al-SnO₂ reflective film layer. However, while a reduction in noise reaches a minimum when approximately 0.6 atom% of Pd is added, the noise slightly increases subsequently, but levels at a constant value approximately between -47.0 dB and -48.0 dB. Stated another way, with the addition of a certain amount or more of Pd, improvements on noise of approximately 1.5 dB can be measured both on the groove and in the groove, as compared with a reflective film which is not added with Pd. On the other hand, the mirror reflectivity and disk reflectivity monotonously decrease as the amount of added Pd is increased.

From the foregoing results, the amount of added Pd is preferably 8 atom% when a reduction in the disk reflectivity is permitted up to 10 %, more preferably 6 atom% when a reduction in the disk reflectivity is permitted up to 8 %, and further more preferably 3 atom% when a reduction in the disk reflectivity is permitted up to 6 %. Most preferably, the amount of added Pd is 0.6 6 atom%, in which case a reduction in nose is maximized.

### [Example 3]

A description will be given of a recording medium 1 according to a third example of the present invention. In this example, the description will focus on total noise, recording LD power, and post-recording jitter when the amount of SnO₂ is varied in the deposited reflective film layer 11.

A spiral groove at a pitch of 0.320 µm was formed in a disk-shaped substrate 11 made of polycarbonate resin which had a thickness of 1. 1 mm and a diameter of 12 cm. On this substrate 11, a reflective film layer 12 made of Al-SnO₂ (or pure aluminum), a second protective layer 13 made of ZnS-SiO₂, a recording film layer 14 made of Bi-Ge-N, and a first protective layer 15 made of ZnS-SiO₂ were laminated in this order by a sputtering method. The sputtering power was chosen to be 700 W. Further, a polycarbonate sheet was adhered to the laminate from above using an ultraviolet curing resin for an adhesive to fabricate a light incident side substrate (cover layer) 16 of 0.1 mm thick.

In this example, in a process of forming the reflective film layer 12 by a sputtering method, several sputter targets were prepared by adding SnO₂ chips to pure aluminum targets as appropriate, and disks were fabricated with the amount of SnO₂ being varied from zero to 5.05 atom% within the deposited reflective film layer 12. Table 5 shows measured total noise, recording LD power, and post-recording jitter of the disks. The measurements were made by the same method as in the aforementioned embodiments.

**Table 5**

| | Number of Chips | Composition after Deposition (Sn0₂) | Total Disk Noise | Reflectivity of Reflective Film Alone | Recording LD Power | Post-Recording Jitter |
|---|---|---|---|---|---|---|
| Disk 3-1 | 0 | 0 | -38.5 dB | 55 % | 5 mW | 10.4 % |
| Disk 3-2 | 1/16 | 0.01 atom% | -38.6 dB | 55 % | 5 mW | 10.0 % |
| Disk 3-3 | 1/8 | 0.03 atom% | -39.2 dB | 55 % | 5 mW | 8.5 % |
| Disk 3-4 | 1/4 | 0.06 atom% | -42.0 dB | 55 % | 5 mW | 7.7 % |
| Disk 3-5 | 1/2 | 0.13 atom% | -41.9 dB | 55 % | 6 mW | 7.9 % |
| Disk 3-6 | 1 | 0.23 atom% | -39.8 dB | 55 % | 5 mW | 8.6 % |
| Disk 3-7 | 3 | 1. 69 atom% | -39.4 dB | 55 % | 5 mW | 9.3 % |
| Disk 3-8 | 4 | 2.25 atom% | -41.3 dB | 53 % | 6 mW | 8.2 % |
| Disk 3-9 6 | | 3.78 atom% | -43.3 dB | 48 % | 5 mW | 7.2 % |
| Disk 3-10 | 8 | 5.05 atom% | -42.7 dB | 44 % | 5 mW | 7.3 % |

As described in the second example, as the sputtering power is reduced, the noise and jitter increase. Here, the result of the experiment reveals that the jitter increases by approximately 2 % when the sputtering power is reduced from 2000 W to 700 W. Thus, in the third example, satisfactory jitter equivalent to that in the first and second examples can be accomplished by increasing the sputtering power to 2000 W under the conditions of the disks 3-3 to 3-10.

Also, any of the disks exhibits a high reflectivity measured for the reflective films alone, equivalent to the reflectivity of a reflective film made of a simple metal.

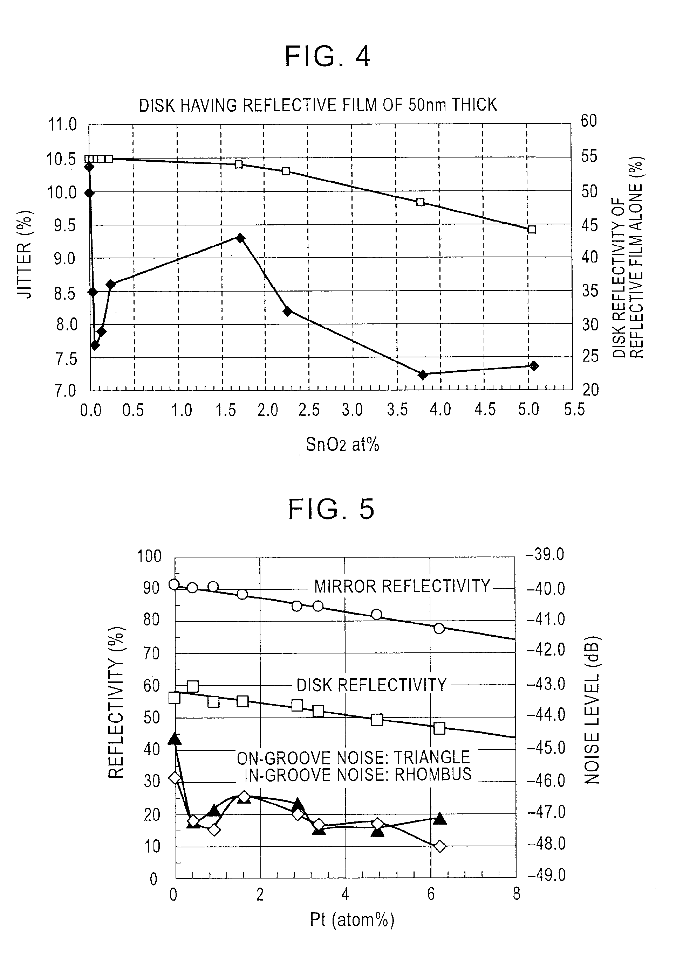

Referring now to Fig. 4, the amount of SnO₂ is preferably equal to or more than 0.02 atom% and less than 1.0 atom% and equal to or more than 1.8 atom%. More preferably, the amount of SnO₂ is less than 2.5 atom% because the reflectivity is lower in the disks 3-6 to 3-10. Note that such conditions need not be taken into consideration if the reflectivity can be sufficiently compensated for by other layers such as the recording film layer 14.

### [Example 4]

A description will be given of a recording medium 1 according to a fourth embodiment of the present invention. In this example, though not limited, the recording medium 1 is an optical disk which has a reflective film layer 12 added with TiO or Nb₂O₃ which is a different oxide from that used in the first to third embodiments. In other words, any oxide may be used as long as it impedes the growth of crystal grains of aluminum or aluminum alloy which comprises the reflective film layer 12 during the deposition process.

A spiral groove at a pitch of 0.320 µm was formed in a disk-shaped substrate 11 made of polycarbonate resin which had a thickness of 1.1 mm and a diameter of 12 cm, as was the case in the first and second examples. On this substrate 11, a reflective film layer 12 made of TiO or Nb₂O₃, which is a different oxide from that used in the first and second embodiment, a second protective layer 13 made of ZnS-SiO₂, a recording film layer 14 made of Bi-Ge-N, and a first protective layer 15 made of ZnS-SiO₂ were laminated in this order by a sputtering method. The sputtering power was chosen to be 700 W. Table 6 shows the layers of the recording medium disk together with their materials and thicknesses.

**Table 6**

| Layer | Material | Thickness |
|---|---|---|
| Reflective Film Layer | Al-TiO (or A1-Nb203) | 50 nm |
| Second Protective Layer | ZnS-Si02 | 20 nm |
| Recording Film Layer | Bi-Ge-N | 12 nm |
| First Protective Layer | ZnS-SiO₂ | 25 nm |

Further, a polycarbonate sheet was adhered to the laminate from above using an ultraviolet curing resin for an adhesive to fabricate a light incident side substrate (cover layer) 16 of 0.1 mm thick.

Here, in the fourth example, two types of recording medium disks were fabricated with different oxides added to the reflective film layers 12. Specifically, in a process of forming the reflective film layer 12 by a sputtering method, two types of sputter targets were prepared, i.e., one added with TiO chips and the other one added with Nb₂O₃ chips, for deposition. The respective recording medium disks are called "disk 4-a" and "disk 4-b," respectively.

For the two types of disks 4-a, 4-b, total noise, recording LD power, and post-recording jitter were measured under similar conditions to the first and second examples. Table 7 shows the total noise, recording LD power, and post-recording jitter which were measured for the disks 2-a, 2-b.

**Table 7**

| | Total Noise | Recording LD Power | Post-Recording Jitter |
|---|---|---|---|
| Disk 4-a | -38.6 dB | 6 mW | 10.0 % |
| Disk 4-b | -38.6 dB | 6 mW | 9.7 % |

The disks 4-a, 4-b present a good result of reduced post-recording jitter, as compared with the disk 3-1 of the third example which has no oxide added to the reflective film layer 12.

When the reflectivities of the sole reflective films, formed in a similar method to the disks 4-a, 4-b, were measured, and the measured values were 56 % and 55 %, respectively. Likewise, the reflective films have high reflectivities equivalent to that of a reflective film made of a simple metal.

### [Comparative Example]

A comparative example will be described for a recording medium which includes a reflective film layer that does not contain any oxide.

The recording medium of the comparative example is the same as the recording media according to the aforementioned first and second examples of the present invention except for the reflective film layer. Total noise, recording LD power, and post-recording jitter were measured for the recording medium according to the comparative example in a similar method.

Specifically, a spiral groove at a pitch of 0.320 µm was formed in a disk-shaped substrate 11 made of polycarbonate resin which had a thickness of 1. 1 mm and a diameter of 12 cm. On this substrate 11, a reflective film layer made of Al or Al-SnO₂, without containing an oxide, a second protective layer made of ZnS-SiO₂, a recording film layer made of Bi-Ge-N, and a first protective layer made of ZnS-SiO₂ were laminated in this order by a sputtering method. The sputtering power was chosen to be 2000 W DC for the recording medium having the reflective film made of Al, and 700 W DC for the recording medium having the reflective film made of Al-Pd (4.1 atom%). The respective layers had the same thicknesses as their counterparts in the first and second examples. Also, the comparative example is similar in that a polycarbonate sheet was adhered to the laminate from above using an ultraviolet curing resin for an adhesive to fabricate a light incident side substrate (cover layer) 16 of 0.1 mm thick.
With the disk as described above, total noise, recording LD power, and post-recording jitter were measured under similar conditions to the aforementioned examples. Table 8 shows the total noise, recording LD power, and post-recording jitter which were measured for the disks having the Al reflective film layer and the Al-Pd reflective film layer, respectively.

**Table 8**

| | Total Noise | Recording LD Power | Post-Recording Jitter |
|---|---|---|---|
| Al Reflective Film Disk | -42.0 dB | 5 mW | 7.5 % |
| Al-Pd Reflective Film Disk | -45.1 dB | 6 mW | 6.9 % |

In comparison with the first and second examples described above, the comparative example failed to exhibit satisfactory jitter, though there is not a large difference in the disk noise. Specifically, it should be understood that the recording media 1 according to the examples of the present invention can improve jitter in particular with the addition of an oxide of a metal, other than aluminum, to the reflective film made of aluminum or aluminum alloy. However, a satisfactory disk noise value is not always associated with a satisfactory recording jitter value. Generally, a thermal distribution is produced within the reflective film depending on the size and shape of crystal grains. Therefore, even recording media producing the same disk noise exhibit different jitter due to different thermal distributions if they differ in the size and shape of crystal grains of their respective reflective films.

### [Example 5]

A description will be given of a recording medium 1 according to a fifth example of the present invention.

An investigation was made on the influence of the content of Pt on the characteristic of a disk having a reflective film layer made of Al-Pt-SnO₂ by creating such disks with different contents of Pt. A spiral groove at a pitch of 0. 320 µm was formed in a disk-shaped substrate 11 made of polycarbonate resin which had a thickness of 1.1 mm and a diameter of 12 cm. On this substrate 11, a reflective film layer 12 made of Al-Pt-SnO₂ was laminated by a sputtering method. The sputtering power was chosen to be 300 W, and the thickness of the reflective film layer 12 was chosen to be 50 nm. Here, for directly observing changes in the characteristics of the reflective film layer 12 due to a change in the content of Pt, none of a second protective layer 13, a recording film layer 14 made of Bi-Ge-N, and a first protective film 15 made of ZnS-SiO₂ was formed, and a polycarbonate sheet was adhered onto the reflective film layer 12 using an ultraviolet curing resin for an adhesive to fabricate a light incident side substrate (cover layer 16) of 00.1 mm thick. Subsequently, the reflective film layer 12 alone was formed.

Further, similar to the fist and second examples, a mirror reflectivity was measured for the aforementioned sample which had an Al-Pt-SnO₂ reflective film layer alone formed on a flat plate. Further, a disk reflectivity and noise were measured for the disk (not shown) formed only with the reflective film layer 12. The results of the foregoing measurements are shown in Table 9 and Fig. 5.

**Table 9**

| | Reflectivity | | Noise level | |
|---|---|---|---|---|
| Pt (atom%), | Mirror | Disk | On groove | In groove |
| 0. 0 0 | 0.90 | 0.56 | -44.6 | -45.9 |
| 0. 4 0 | 0.90 | 0.59 | -47.2 | -47.2 |
| 0. 8 9 | 0.90 | 0.55 | -46.9 | -47.4 |
| 1. 5 9 | 0.88 | 0.55 | -46.5 | -46.5 |
| 2. 8 7 | 0.84 | 0.54 | -46.7 | -47.0 |
| 3. 3 7 | 0.84 | 0.51 | -47.3 | -47.4 |
| 4. 7 8 | 0.811 | 0.49 | -47.4 | -47.3 |
| 6. 2 0 | 0.77 | 0.46 | -47.2 | -48.0 |

As is apparent from Table 9 and Fig. 5, 0.4 atom% or more of Pt, contained in the reflective film layer, ensures a noise level improving effect of, for example, 0.5 dB or more, as compared with a reflective film layer which is not added with Pt. On the other hand, since a larger amount of added Pt results in a lower reflectivity, a large amount of addition is not preferable because the reflectivity becomes extremely low, when such a reflective film layer is applied to a recordable disk, causing difficulties in recording and reproduction. Assuming that up to 10 % of reduction in reflectivity is permitted with respect to a reflective film layer not added with Pt, an upper limit of the amount of added Pt is 5 atom%. Consequently, an optimal range for the amount of added Pt is 0.4 atom% or more and 5 atom% or less, and more preferably, 0.4 atom% or more and 1 atom% or less. Further, as is apparent from Table 9 and Fig. 5, the noise level improving effect is expected even in a range for the amount of added Pt equal to or more than 0.1 1 atom% and equal to or less than 0.4 atom%.

### [Example 6]

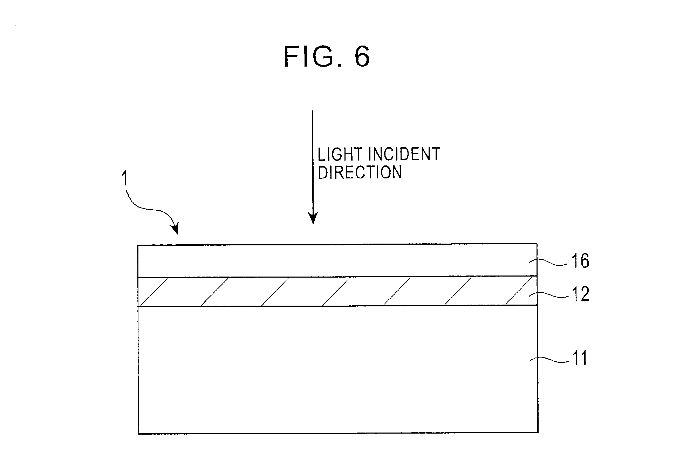

Refferring to Fig. 6, explanation will be made on a further embodiment of the present invention in which the reflective film layer 12 made of Al-Pd-SnO₂ is provided in a reproduction-only type disk. In order to confirm the effect of the present invention, a reproduction jitter of the reproduction-only disk of this embodiment was compared with the reproduction jitter of a reproduction-only type disk having a conventional reflective film layer made of Al-Ti.

As shown in Fig. 6, a disk-shaped substrate 11 made of polycarbonate resin having a thickness of 1. 1 mm and a diameter of 12 cm was used for this embodiment. A pit train in spiral form with a pitch of 0.320 µm was formed in the substrate 11. The recording information is held in the pit train. In this embodiment, 1-7 modulated signal of random data was recorded as a pattern having a minimum pit length of 0.149 µm. The recording capacity of the disk was 25 GigaBytes,

On the substrate 11, a reflective film layer 12 made of Al-Pd-SnO₂ was formed by sputtering.

Since the disk of this embodiment is solely for reproduction, the recording film layer 14 made of Bi-Ge-N, and the first protective layer 15 made of ZnS-SiO₂ were not formed. Instead, a polycarbonate sheet was adhered to the reflective film 12 from above using an ultraviolet curing resin for an adhesive to fabricate a light incident side substrate (cover layer) 16 of 0.1 mm thick.

As an example of the conventional disk, a reflective layer made of Al-Ti was formed by sputtering on a substrate which was the same as the above-described substrate 11.

A polycarbonate sheet was adhered to the reflection film layer from above using an ultraviolet curing resin for an adhesive to fabricate a light incident side substrate (cover layer) of 0. 1 mm thick which was the same as the above-described light incident side substrate (cover layer) 16.

Jitter was measured for the disks of the two types described above, using an optical head having a wavelength of 405 nm and an objective lens with a numerical aperture of 0.85. The line velocity was 4.92 m/s, and the reproduction laser power was 0.35mW. Table 10 below shows a result of the measurement.

**Table 10**

| | Material(atom ratio) | Reproduction Jitter |
|---|---|---|
| Ai-Ti Reflective Film Disk | Al:Ti = 99.2:0.8 | 5.5% |
| Al-Pd-SnO₂Reflective Film Disk | Al:Pd:SnO₂=98.3:1.5:0.2 | 5.2% |

In reproduction-only disks the recording information is held in the pits. Therefore, it has been generally accepted that the signal quality is determined by the shape of the pit train formed in the substrate made of polycarbonate, for example. However, it was revealed that the S/N (Signal to Noise) ratio of the reproduction signal can be improved by the use of a low noise material in the reflection film layer as exemplified in this embodiment, so that a better reproduction jitter characteristic is obtained.

When the film thickness of the reflective film 12 is increased to obtain a higher reflectivity, the shape of the pits in the substrate made of a resin is deformed by the reflective layer. Therefore, a higher performance can be gained by the examples of the present invention in which the diameters of the crystal grains are small and uniform.

It is needless to mention that the material of the reflective layer which is applicable to the reproduction-only type disk is not limited to Al-Pd-SnO₂ described above. Rather, similar good effects can be obtained by using the materials described in connection other embodiments of the present invention.

## Claims

1. An optical recording medium having a reflective film, wherein:
said reflective film includes an aluminum alloy and an oxide of a metal other than aluminum.

2. An optical recording medium according to claim 1, wherein said oxide comprise any of SnO₂, TiO, and Nb₂O₃.

3. An optical recording medium according to claim 1, wherein said aluminum alloy has an average crystal grain diameter not more than one tenth as large as a spot diameter of a laser irradiated to said optical recording medium.

4. An optical recording medium according to claim 1, wherein said aluminum alloy has an average crystal grain diameter of 47 nm or less.

5. An optical recording medium according to claim 1, wherein said aluminum alloy contains Pd in a range of 0.6 to 8 atom%.

6. An optical recording medium according to claim 1, wherein said aluminum alloy contains Au in a range of 1.5 to 7 atom%.

7. An optical recording medium according to claim 1, wherein said aluminum alloy contains Pt in a range of 0.4 to 5 atom%.

8. An optical recording medium according to claim 1, wherein said reflective film, a protective film, a recording film, another protective film, and a cover layer on which a laser irradiated to said optical recording medium is incident are laminated on a substrate.

9. An optical recording medium according to claim 1, further comprising a recording film which mainly contains a nitride of one of Bi, Sn, and Fe, and one or a plurality of nitrides of Ge, Ti, Si, and Al.

10. An optical recording medium as claimed in claim 1, wherein said recording medium is reproduction-only, and said reflective film is formed on a substrate in which information is carried by pits.

11. A method of manufacturing an optical recording medium including a step of forming a reflective film on a substrate by a sputtering method, said method comprising:
an atmosphere forming step for introducing an oxide of a metal other than aluminum into a sputter atmosphere together with an aluminum alloy; and
a step of laminating said oxide on said substrate together with said aluminum alloy.

12. A method of manufacturing an optical recording medium according to claim 11, wherein said atmosphere forming step includes the step of preparing a target produced by adding said oxide to said aluminum alloy.

13. A method of manufacturing an optical recording medium according to claim 11, wherein said atmosphere forming step includes the steps of:
preparing a target made of said aluminum alloy; and
preparing a target made of said oxide.

14. A method of manufacturing an optical recording medium according to claim 11, wherein said oxide is one of SnO₂, TiO, and Nb₂O₃.
